# EUROPÄISCHE PATENTSCHRIFT

(11) **EP 1 040 585 B1**
(45) Veröffentlichungstag und Bekanntmachung des Hinweises auf die Patenterteilung: **27.03.2002**
(21) Anmeldenummer: 98964386.1
(22) Anmeldetag: 09.12.1998
(51) Int. Cl.: H04B 1/08, H04N 5/445

(54) **RUNDFUNKEMPFÄNGER MIT EINGEBAUTER BEDIENUNGSANLEITUNG**
RADIO RECEIVER WITH BUILT-IN OPERATING INSTRUCTIONS
RECEPTEUR RADIO A MODE D'EMPLOI INCORPORE

(30) Priorität: 09.12.1997 DE 19754406
(43) Veröffentlichungstag der Anmeldung: 04.10.2000
(73) Patentinhaber: ROBERT BOSCH GMBH, 70442 Stuttgart (DE)
(72) Erfinder: WENDLAND, Arnd, D-31199 Diekholzen (DE)
(86) Internationale Anmeldenummer: DE9803613
(87) Internationale Veröffentlichungsnummer: WO9930425

(56) Entgegenhaltungen:
- EP-A- 0 393 313
- EP-A- 0 483 463
- EP-A- 0 624 026

## Beschreibung

Die Erfindung betrifft einen Rundfunkempfänger.

Mit zunehmender Komplexität von Rundfunkempfängern, beispielsweise durch Zusatzdienste wie RDS oder TMC, ist das Erlernen der Bedienung derartiger Geräte schwieriger geworden. Die bisher verfügbaren gedruckten Bedienungsanleitungen sind umfangreicher und können häufig von Laien nur mit viel Aufwand und praktischen Übungen verstanden werden. Außerdem besteht für die Hersteller derartiger Geräte die Schwierigkeit, die gedruckten Bedienungsanleitungen stets auf dem Entwicklungsstand zu halten, welchen das jeweils zugehörige Gerät aufweist.

EP-A-0'483'463 offenbart einen Satellitten empfänger mit einem Benutzerführungs-informationsspeicher, der über einen angesohlossenen Fernsehempfänger ausgebbar ist.

EP-A-0'393'313 offenbart eine Einrichtung, bei der die Benutzerführungsinformation im Zeitmultiplex mit der Fernsehtext-Informationsübersicht seite empfangen werden.

Aufgabe der vorliegenden Erfindung ist es daher, eine Bedienungsanleitung zur Verfügung zu stellen, die bei Auftreten von Bedienungsfragen stets verfügbar ist und dem Entwicklungsstand des jeweiligen Gerätes angepaßt ist.

Diese Aufgabe wird erfindungsgemäß dadurch gelöst, daß eine gespeicherte Bedienungsanleitung abrufbar und über eine Ausgabeeinrichtung ausgebbar ist.

Die Ausgabe der Bedienungsanleitung kann im Rahmen der Erfindung sowohl als Text und/oder mit Hilfe einer Sprachausgabe erfolgen.

Der erfindungsgemäße Rundfunkempfänger hat außerdem den Vorteil, daß die Bedienungsanleitung nicht verlegt werden kann und bei einem Besitzerwechsel des Rundfunkempfängers ohne weiteres an den Erwerber übergeht.

Bei einer ersten Ausführungsform der Erfindung ist vorgesehen, daß die Bedienungsanleitung aus einem nichtflüchtigen Speicher im Rundfunkempfänger abrufbar ist. Diese Ausführungsform wird insbesondere dadurch in preiswerter Weise ermöglicht, daß digitale Speicher in zunehmenden Maße preiswerter und kompakter werden.

Eine zweite Ausführungsform der Erfindung besteht darin, daß Mittel zum Abrufen der Bedienungsanleitung aus einer mit dem Rundfunkempfänger über eine Übertragungseinrichtung verbindbaren zentralen Einrichtung und zum Empfang der von der zentralen Einrichtung empfangenen Bedienungsanleitung vorgesehen sind.

Diese Ausführungsform erfordert zwar den Zugang zu einer Übertragungseinrichtung, beispielsweise einem Mobilfunknetz oder bei stationären Rundfunkempfängern auch zu einem üblichen Kommunikationsnetz einschließlich des Internetzes, hat jedoch den Vorteil, daß in der zentralen Einrichtung eine für alle betroffenen Empfänger gültige Bedienungsanleitung geändert werden kann, ohne daß der Benutzer des Gerätes dafür irgendwelchen Aufwand zu betreiben hat. So kann beispielsweise in der zentralen Einrichtung ein ursprünglich vorhandener Fehler korrigiert werden. Außerdem kann eine Änderung der Bedienungsanleitung durch eine Änderung der mit dem Rundfunkempfänger empfangbaren Dienste notwendig werden, was ebenfalls in der zentralen Einrichtung in einfacher Weise geschehen kann.

Eine vorteilhafte Ausgestaltung der Erfindung besteht darin, daß jeweils ein Teil der Bedienungsanleitung abrufbar ist. Dadurch kann das ansonsten erforderliche Blättern in der möglicherweise sehr umfangreichen Bedienungsanleitung vereinfacht oder eingespart werden. Bei dieser Ausgestaltung kann vorzugsweise vorgesehen sein, daß ein Teil der Bedienungsanleitung durch Anlegen der Betriebsspannung abrufbar ist. Dieser Teil der Bedienungsanleitung kann beispielsweise eine Einführungsinformation enthalten, die den Benutzer bei der erstmaligen Inbetriebnahme über die wichtigsten Funktionen des Gerätes informiert und gegebenenfalls auf weitere Informationen in der Bedienungsanleitung hinweist. Außerdem kann dieser Teil der Bedienungsanleitung wie andere Teile durch eine Eingabe abrufbar sein.

Eine Weiterbildung des erfindungsgemäßen Rundfunkempfängers besteht darin, daß durch ein vorgegebenes Bedienelement der Abruf und die Ausgabe eines Teils der Bedienungsanleitung erfolgen, der dem jeweiligen Betriebszustand des Empfängers angepaßt ist. Hierdurch ist eine kontextabhängige Auswahl aus der Bedienungsanleitung möglich, so daß der Benutzer den jeweils zugehörigen Teil der Bedienungsanleitung erhält.

Vorzugsweise ist bei dieser Weiterbildung vorgesehen, daß durch mehrmaliges Betätigen des vorgegebenen Bedienelementes weitere Teile der Bedienungsanleitung ausgegeben werden.

Bei dem erfindungsgemäßen Rundfunkempfänger kann auch vorgesehen sein, daß ein Teil der Bedienungsanleitung durch Betätigen des vorgegebenen Bedienelementes und anschließendes Betätigen eines weiteren Bedienelementes ausgegeben wird, wobei der Teil der Bedienungsanleitung sich auf das weitere Bedienelement bezieht. Dadurch wird die Auswahl aus der Bedienungsanleitung auch dann erleichtert, wenn der Benutzer Informationen unabhängig von dem jeweiligen Betriebszustand des Rundfunkempfängers erhalten möchte. So kann beispielsweise nach Betätigen des vorgegebenen Bedienelementes, gegebenenfalls mit "HELP" bezeichnet, eine Taste mit der Funktion "AUDIO" betätigt werden. Dann erhält der Benutzer Informationen über die möglichen Audio-Einstellungen, beispielsweise "Mit der Funktion AUDIO können Einstellungen der Klanggeometrie eingestellt werden. Sie können den Höreindruck nach vorne, hinten, links oder rechts verschieben. Mit der Wippe links/rechts können sie die Balance, Wippe hoch/runter den Überblender verändern".

Ausführungsbeispiele der Erfindung sind in der Zeichnung anhand mehrerer Figuren dargestellt und in der nachfolgenden Beschreibung näher erläutert. Es zeigt:
- Fig. 1: ein Ausführungsbeispiel mit einer im Rundfunkempfänger gespeicherten Bedienungsanleitung und
- Fig. 2: ein Ausführungsbeispiel, das für den Abruf der Bedienungsanleitung von einer zentralen Einrichtung ausgebildet ist.

Gleiche Teile sind in den Figuren mit gleichen Bezugszeichen versehen.

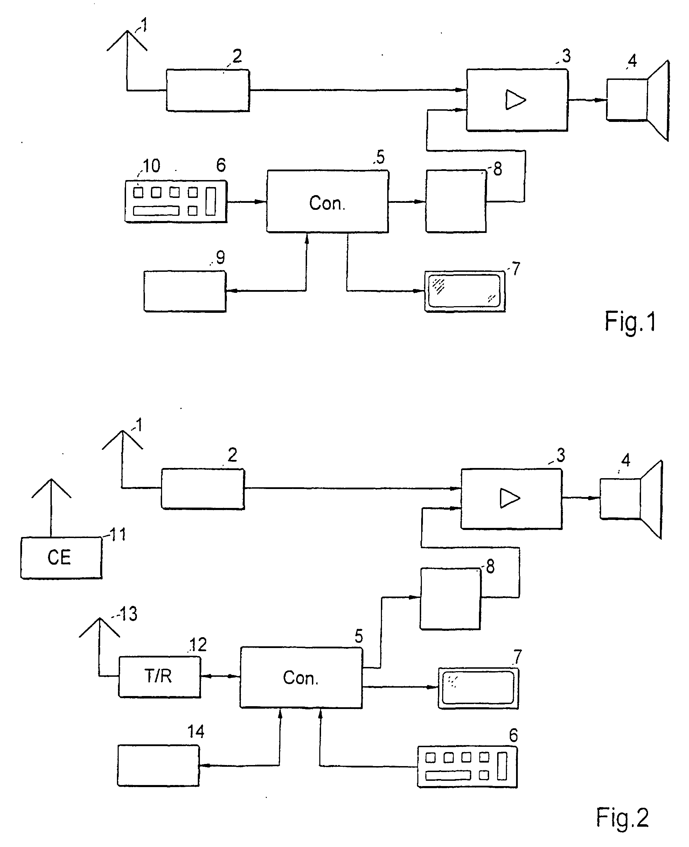

Beide Ausführungsbeispiele weisen eine Antenne 1, ein Empfangsteil 2, einen NF-Verstärker 3 und einen Lautsprecher 4 auf, wobei der Übersichtlichkeit halber auf die Darstellungen von Einzelheiten, wie beispielsweise mehrere Lautsprecher für Stereowiedergabe, Stereo-Decoder, RDS-Decoder usw., verzichtet wurde. Mit einem Controller 5, an den eine Tastatur 6 angeschlossen ist, werden sämtliche Funktionen des Empfängers gesteuert - beispielsweise Senderwahl und Lautstärkeeinstellung. An den Controller 5 ist ferner ein Display 7 angeschlossen, auf welchem die jeweiligen Einstellungen und weitere Informationen sichtbar gemacht werden können. Außerdem ist bei den Ausführungsbeispielen eine Sprachausgabeeinheit 8 an den Controller 5 angeschlossen, deren Ausgangssignale über den NF-Verstärker 3 und den Lautsprecher 4 hörbar gemacht werden. Die Bedienungsanleitung ist bei dem in Fig. 1 dargestellten Ausführungsbeispiel in einem nichtflüchtigen Speicher 9 abgelegt. Dieser kann neben der Bedienungsanleitung auch andere zum Betrieb des Rundfunkempfängers erforderlichen Daten enthalten.

Auf der Tastatur 6 ist eine spezielle Taste 10 für den Abruf der Bedienungsanleitung aus dem Speicher 9 vorgesehen, die entsprechend gekennzeichnet ist - beispielsweise mit dem Wort HELP.

Bei dem Ausführungsbeispiel nach Fig. 2 ist die Bedienungsanleitung in einer zentralen Einrichtung 11 (CE) abgelegt, die über ein geeignetes Übertragungsmedium mit dem erfindungsgemäßen Empfänger verbunden werden kann. Dazu ist bei dem in Fig. 2 dargestellten Ausführungsbeispiel eine Sende-/Empfangseinrichtung 12 (T/R) mit einer Antenne 13 vorgesehen. Bei Betätigung der HELP-Taste und gegebenenfalls mehrerer Tasten der Tastatur 6 sendet die Sende-/Empfangseinrichtung 12 eine geeignete Anfrage an die zentrale Einrichtung 11. Diese Anfrage enthält Daten über den anfragenden Empfänger, geeignete Angaben (Adressen) für die Übertragung der Bedienungsanleitung an den Empfänger und gegebenenfalls Angaben, welche Teile der Bedienungsanleitung gewünscht werden. Die zentrale Einrichtung besteht beispielsweise im wesentlichen aus einem Rechner, der alle benötigten Bedienungsanleitungen enthält und verwaltet. Als Antwort werden die Bedienungsanleitung oder Teile davon bei dem Ausführungsbeispiel nach Fig. 2 über das gleiche Übertragungsmedium, beispielsweise Mobilfunknetz oder Internet, an den Empfänger übertragen, wo sie über die Antenne 13 und die Sende-/Empfangseinrichtung 12 dem Controller 5 zugeführt werden. Ein Speicher 14 ist zur vorübergehenden Speicherung der empfangenen Betriebsanleitung oder deren Teile vorgesehen.

## Patentansprüche

1. Rundfunkempfänger, **dadurch gekennzeichnet, daß** eine in einem Speicher (9, 14) abgespeicherte Bedienungsanleitung in beliebigen Teilen durch Eingabe abrufbar ist und über eine Ausgabeeinrichtung (7, 8) optisch und/oder akustisch darstellbar ist.

2. Rundfunkempfänger nach Anspruch 1, **dadurch gekennzeichnet, daß** ein Teil der Bedienungsanleitung durch Anlegen der Betriebsspannung abrufbar ist.

3. Rundfunkempfänger nach Anspruch 1 oder 2, **dadurch gekennzeichnet, daß** ein nichtflüchtiger Speicher (9) im Rundfunkempfänger die Bedienungsanleitung abspeichert.

4. Rundfunkempfänger nach Anspruch 1 oder 2, **dadurch gekennzeichnet, daß** der Rundfunkempfänger eine Übertragungseinrichtung (12) aufweist, die zum Empfang der Bedienungsanleitung oder mindestens von Teilen der Bedienungsanleitung von einer zentralen Einrichtung (11) dient.

5. Rundfunkempfänger nach Anspruch 3 oder 4, **dadurch gekennzeichnet, daß** der Rundfunkempfänger ein Bedienelement (10) aufweist, womit der Abruf und die Ausgabe eines Teils der Bedienungsanleitung erfolgen, wobei der Teil der Bedienungsanleitung einem jeweiligen Betriebszustand des Empfängers angepaßt ist.

6. Rundfunkempfänger nach Anspruch 5, **dadurch gekennzeichnet, daß** das Bedienelement (10) ein mehrmaliges Betätigen erlaubt, um weitere Teile der Bedienungsanleitung auszugeben.

7. Rundfunkempfänger nach Anspruch 6, **dadurch gekennzeichnet, daß** das Bedienelement (10) und ein weiteres Bedienelement es ermöglichen, durch eine Betätigung des Bedienelements (10) und durch eine Betätigung des weiteren Bedienelements einen sich auf das weitere Bedienelement beziehenden Teil der Bedienungsanleitung auszugeben.

## Claims

1. Broadcast radio receiver, **characterized in that** any desired parts of an operating manual stored in a memory (9, 14) can be retrieved by input and can be visually and/or audibly presented using an output device (7, 8).

2. Broadcast radio receiver according to Claim 1, **characterized in that** part of the operating manual can be retrieved by applying the operating voltage.

3. Broadcast radio receiver according to Claim 1 or 2, **characterized in that** a non-volatile memory (9) in the broadcast radio receiver stores the operating manual.

4. Broadcast radio receiver according to Claim 1 or 2, **characterized in that** the broadcast radio receiver has a transmission device (12) which is used for receiving the operating manual or at least parts of the operating manual from a central device (11).

5. Broadcast radio receiver according to Claim 3 or 4, **characterized in that** the broadcast radio receiver has a control element (10) which is used to retrieve and output part of the operating manual, the part of the operating manual being matched to a respective operating state of the receiver.

6. Broadcast radio receiver according to Claim 5, **characterized in that** the control element (10) permits repeated actuation in order to output further parts of the operating manual.

7. Broadcast radio receiver according to Claim 6, **characterized in that** the control element (10) and a further control element permit part of the operating manual which relates to the further control element to be output by actuating the control element (10) and by actuating the further control element.

## Revendications

1. Récepteur radiophonique
**caractérisé en ce qu'**
un mode d'emploi enregistré dans une mémoire (9, 14) peut être appelé par n'importe quelle entrée et être affiché par une installation d'affichage (7, 8) optique et/ou acoustique.

2. Récepteur radiophonique selon la revendication 1,
**caractérisé en ce qu'**
une partie du mode d'emploi peut être appelée par l'application de la tension de fonctionnement.

3. Récepteur radiophonique selon la revendication 1 ou 2,
**caractérisé en ce que**
le mode d'emploi est enregistré dans une mémoire non fugitive (9) du récepteur radiophonique.

4. Récepteur radiophonique selon l'une quelconque des revendications 1 ou 2,
**caractérisé en ce qu'**
il comporte une installation de transmission (12) servant à la réception du mode d'emploi ou au moins d'une partie du mode d'emploi à partir d'une installation centrale (11).

5. Récepteur radiophonique selon l'une quelconque des revendications 3 ou 4,
**caractérisé en ce qu'**
il comporte un élément de manoeuvre (10) permettant d'appeler et d'émettre une partie du mode d'emploi, cette partie du mode d'emploi étant adaptée à l'état de fonctionnement respectif du récepteur.

6. Récepteur radiophonique selon la revendication 5,
**caractérisé en ce que**
l'élément de manoeuvre (10) permet un actionnement multiple pour indiquer d'autres parties du mode d'emploi.

7. Récepteur radiophonique selon la revendication 6,
**caractérisé en ce que**
l'élément de manoeuvre (10) et un autre élément de manoeuvre permettent, par l'actionnement de l'élément de manoeuvre (10) et celui de l'autre élément de manoeuvre, d'émettre une partie du mode d'emploi concernant l'autre élément de manoeuvre.
